(19) Europäisches Patentamt
European Patent Office
Office européen des brevets

(11) EP 0 586 626 B1

(12) **EUROPÄISCHE PATENTSCHRIFT**

(45) Veröffentlichungstag und Bekanntmachung des Hinweises auf die Patenterteilung:
**28.01.1998 Patentblatt 1998/05**

(51) Int Cl.6: **G08G 1/0968**, G05D 1/02, G06F 19/00

(21) Anmeldenummer: 93902081.4

(22) Anmeldetag: **04.02.1993**

(86) Internationale Anmeldenummer:
**PCT/DE93/00094**

(87) Internationale Veröffentlichungsnummer:
**WO 93/17406 (02.09.1993 Gazette 1993/21)**

(54) **NAVIGATIONSEINRICHTUNG FÜR LANDFAHRZEUGE**

NAVIGATION DEVICE FOR ROAD VEHICLES

SYSTEME DE NAVIGATION POUR VEHICULES ROUTIERS

(84) Benannte Vertragsstaaten:
**DE FR IT SE**

(30) Priorität: **27.02.1992 DE 4205979**

(43) Veröffentlichungstag der Anmeldung:
**16.03.1994 Patentblatt 1994/11**

(73) Patentinhaber: **ROBERT BOSCH GMBH**
**70442 Stuttgart (DE)**

(72) Erfinder:
- **HEINTZ, Frieder**
  **D-7505 Ettlingen 6 (DE)**
- **WINNER, Hermann**
  **D-7500 Karlsruhe 41 (DE)**
- **GEISER, Georg**
  **D-7500 Karlsruhe (DE)**

(56) Entgegenhaltungen:
EP-A- 0 487 280          DE-A- 3 912 353
DE-A- 4 201 142

## Beschreibung

Stand der Technik

Die Erfindung betrifft eine Navigationseinrichtung für Landfahrzeuge insbesondere für Personenkraftwagen und Lastkraftwagen, nach der Gattung des Anspruchs 1, darüberhinaus ein Verfahren zur Ausgabe von Weginformationen für Fahrer von Landfahrzeugen gemäß Oberbegriff des Anspruchs 12.

Auch als Ortungssysteme bezeichnete Navigationseinrichtungen für Landfahrzeuge sind bekannt. Sie helfen dem Fahrer des Fahrzeugs dabei, sich auch in unbekannten Gebieten zurechtzufinden, überdies, Gefahren rechtzeitig zu erkennen.

Bei bekannten Einrichtungen werden aus den Informationen über die Fahrtstrecke gefahrenrelevante Daten gespeichert, darüber hinaus empfohlene Geschwindigkeiten, die in diesen Bereichen eingehalten werden sollten. Es ist ohneweiteres ersichtlich, daß bei der Fülle von Informationen, die bei derartigen Einrichtungen dem Fahrer gegebenenfalls zur Verfügung gestellt werden müssen, umfangreiche Speichereinrichtungen vorgesehen werden müssen, die die Integration derartiger Einrichtungen in Landfahrzeuge erschweren, zumindest hohe Kosten für derartige Systeme zur Folge haben.

Vorteile der Erfindung

Die Navigationseinrichtung gemäß der Erfindung, sowie das erfindungsgemäße Verfahren zur Ausgabe von, Weginformationen haben demgegenüber den Vorteil, daß der Speicherbedarf reduziert ist, so daß eine einfachere Integration in Landfahrzeuge bei reduzierten Preisen möglich ist, ohne daß es zu Einer Einschränkung der Verkehrssicherheit käme.

Dadurch, daß aus abgespeicherten geographischen Daten von der Navigationseinrichtung sicherheitsrelevante Angaben, beispielsweise die Grenzgeschwindigkeit, für das Durchfahren einer künftigen Fahrtstrecke berechnet werden, bedarf es nicht mehr der Speicherung derartiger Angaben, ohne daß irgendwelche Sicherheitseinbußen des Systems beziehungsweise des Verfahrens gegeben wären. Die Navigationseinrichtung weist dazu eine Berechnungseinheit auf, die aus geographischen Daten zum Verlauf der Fahrtstrecke die Grenzgeschwindigkeit bestimmt, die für die weitere Fahrt relevant ist. Eine Vergleichseinrichtung dient dazu, die momentane Geschwindigkeit des Fahrzeugs mit der berechneten Grenzgeschwindigkeit zu vergleichen und gegebenenfalls eine Informationsausgabeeinrichtung zu aktivieren, die den Fahrer auf eine Abweichung zwischen momentaner und Grenzgeschwindigkeit hinweist.

Ein bevorzugtes Ausführbeispiel der Navigationseinrichtung zeichnet sich durch eine Berechnungseinheit aus, die zur Bestimmung einer sicheren Grenzgeschwindigkeit, die für das Durchfahren einer vor dem Fahrzeug liegenden Strecke eingehalten werden sollte, Kanten und Winkel eines festen Bezugssystems auswertet, durch die das Streckenstück zwischen zwei Stützpunkten definiert wird. Aus der Länge eines Kantenstücks kann der einem Stützpunkt zugeordnete Krümmungswert berechnet werden, aus dem die Grenzgeschwindigkeit bestimmt werden kann, mit der dieser Streckenabschnitt gefahrlos durchfahren werden kann. Bei dieser Geschwindigkeit wird also der maximale Kraftschlußbeiwert nicht überschritten, so daß das Fahrzeug nicht ins Schleudern gerät. Daher ist außerdem sichergestellt, daß eine maximale Querbeschleunigung des Fahrzeugs nicht überschritten werden kann. Eine Vergleichseinrichtung des Navigationssystems vergleicht die momentane Geschwindigkeit des Fahrzeugs mit der berechneten Grenzgeschwindigkeit und aktiviert bei einem Abweichen die Informationsausgabeeinrichtung, so daß der Fahrer vor drohenden Gefahren gewarnt wird.

Bei einem bevorzugten Ausführungsbeispiel der Navigationseinrichtung kann gemeinsam mit der Informationeinrichtung oder alternativ dazu eine Umsetzungseinrichtung aktiviert werden, die Stellglieder des Fahrzeugs beeinflußt, beispielsweise ein elektronisches Gaspedal so verstellt, daß eine Verzögerung des Fahrzeugs eintritt. Es ist auch möglich, daß in ein automatisches Getriebe eingegriffen wird oder die Bremseinrichtung des Fahrzeugs in Aktion tritt.

Weitere Ausgestaltungsmöglichkeiten der Navigationseinrichtung ergeben sich aus den, Unteransprüchen.

Bevorzugt wird eine Ausführungsform des Verfahrens, bei der Daten zur Fahrtstrecke als Kanten und Winkel eines festen Bezugssystems abgespeichert sind, die das Streckenstück zwischen zwei Stützpunkten beschreiben. Derartige Angaben zu Fahrtstrecken sind für bekannte Navigationssysteme verfügbar, sie sind daher einfach und relativ kostengünstig für das hier beschriebene System einsetzbar. Die Länge eines Kantenstücks wird bei der Berechnung eines Krümmungswerts herangezogen, der dann für die Bestimmung der diesem Kantenstück zugeordneten Grenzgeschwindigkeit zugrundegelegt wird. Das heißt also, die Grenzgeschwindigkeit eines Streckenabschnitts kann aufgrund bereits verfügbarer Daten einfach berechnet werden. Es bedarf nicht mehr der Abspeicherung zusätzlicher Informationen bezüglich diese Streckenstücks, insbesondere nicht der Abspreicherung einer für die Durchfahrung dieses Abschnitts empfohlenen Geschwindigkeit. Es ist vielmehr möglich, diese Angaben während der Fahrt zu berechnen und gegebenenfalls dem Fahrer zur Verfügung zu stellen.

Bei einer weiteren bevorzugten Ausführungsform des Verfahrens wird die Grenzgeschwindigkeit auf folgende Weise gewonnen: Es wird die Abweichung zwischen der theoretischen gradlinigen Fortsetzung der momentanen Fahrtrichtung und der Verbindungslinie zwischen der momentanen Position des Fahrzeugs und einem auf der tatsächlichen künftigen Fahrtstrecke liegenden Haltepunkt bestimmt, der bei einer Bremsung des Kraftfahrzeugs erreicht wird. Ausgehend von den in der Navigationseinrichtung gespeicherten geographischen Daten zur Fahrtstrecke und von der Bestimmung des Bremswegs angesichts einer gegebenen Momentangeschwindigkeit kann zu jedem Zeitpunkt der auf der tatsächlichen Fahrtstrecke liegende Haltepunkt des Fahrzeugs ohne weiteres bestimmt werden, ohne daß es der Abspeicherung zusätzlicher Informationen in der Navigationseinrichtung bedürfte. Der zwischen der geradlinigen Fortsetzung und der Verbindungslinie eingeschlossene Winkel wird mit einem Grenzwinkel verglichen, bei dessen Überschreitung der berechnete Haltepunkt des Fahrzeugs außerhalb der Einsehbarkeit eines vorausliegenden, gekrümmten Streckenabschnitts liegt. Durch einen Vergleich der Grenzgeschwindigkeit mit der momentanen Geschwindigkeit des Fahrzeugs kann bei einer Abweichung eine Warnung an den Fahrer abgegeben werden. Dabei ist es also nicht erforderlich, daß eine für den betroffenen Streckenabschnitt vorgegebene Grenzgeschwindigkeit abgespeichert werden muß. Es ist vielmehr möglich, diese während der Fahrt zu berechnen, ohne daß es zu irgendwelchen Sicherheitseinbußen für den Fahrer käme.

Weitere Ausgestaltungsmöglichkeiten des Verfahrens ergeben sich aus den übrigen Unteransprüchen.

Zeichnung

Die Erfindung wird im folgenden anhand der Zeichnung näher erläutert. Es zeigen:

Figur 1    Ein schematisches Blockdiagramm einer Navigationseinrichtung;

Figur 2    eine Darstellung zur Verdeutlichung einer ersten Ausführungsform der Weginformations-Ausgabe;

Figur 3    ein Diagramm zur Verdeutlichung einer weiteren Ausführungsform einer Weginformations-Ausgabe;

Figur 4    einen skizzierten Fahrtstreckenabschnitt zur Erläuterung des Diagramms gemäß Figur 2 und

Figur 5    eine Darstellung zur Verdeutlichung einer weiteren Ausführungsform eines Weginformations-Ausgabeverfahrens.

Beschreibung der Ausführungsbeispiele

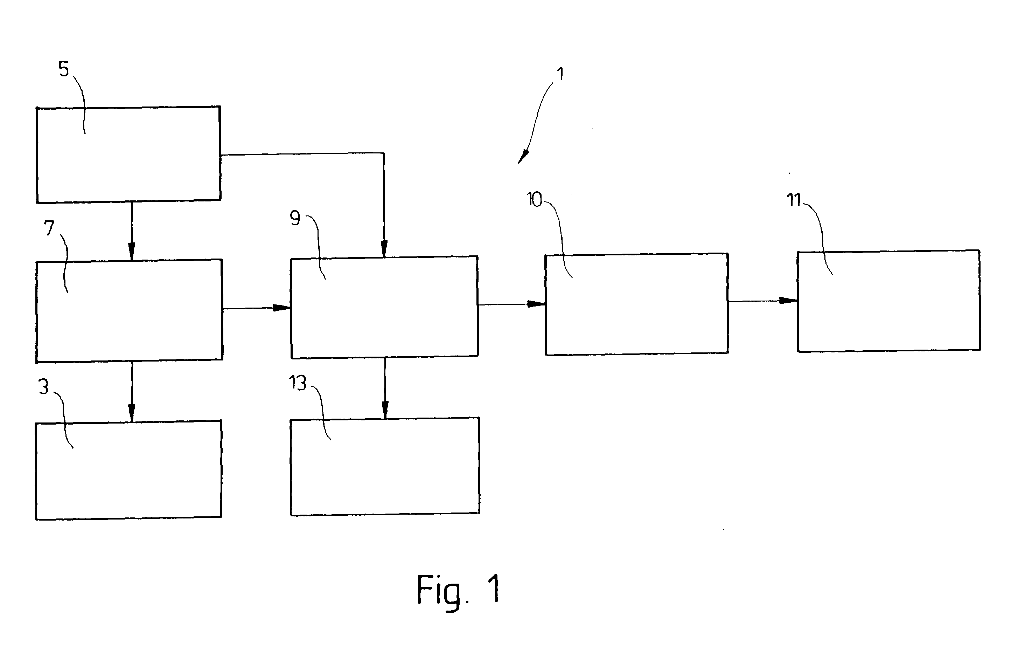

Figur 1 zeigt in schematischer Darstellung ein Blockdiagramm einer Navigationseinrichtung 1, die einen Speicher 3 für geographische Daten und Sensoren 5 zum Erfassen aktueller Fahrdaten aufweist. Speicher und Sensoren sind mit einer auch als Travelpilot bezeichneten Rechnereinheit 7 verbunden. Die Navigationseinrichtung weist außerdem eine Berechnungseinheit 9 auf, der Ausgangssignale der Sensoren 5 und der Rechnereinheit 7 eingegeben werden. Ausgangssignale der Berechnungseinheit weerden einer Vergleichseinrichtung 10 und dann einer Informationsausgabeeinrichtung 11 und einer Umsetzungseinrichtung 13 zugeleitet.

In dem Speicher 3 sind Angaben zu dem zu befahrenden Streckennetz enthalten. Besonders bewährt haben sich hier optische Speichermedien, beispielsweise CD-ROM's. Der Rechnereinheit 7 werden jeweils die geographischen Daten übermittelt, die für einen aktuellen Kartenausschnitt relevant sind, also für die Strecke, auf der sich das Landfahrzeug bewegt.

Die Sensoren 5 erfassen für die Rechnereinheit 7 relevante Daten. Beispielsweise wird über Radsensoren die momentane Geschwindigkeit des Landfahrzeugs ermittelt. Andere Sensoren können beispielsweise die Umgebungstemperatur oder sonstige Umwelteinflüsse ermitteln, wobei auch eine indirekte Erfassung möglich ist. Die Feuchtigkeit der Straße kann beispielsweise dadurch ermittelt werden, daß die momentane Scheibenwischerfunktion, eines Kraftfahrzeugs festgestellt wird. Bei Intervallschaltung ist von einer geringen Straßenfeuchtigkeit, bei maximaler Geschwindigkeit des Scheibenwischers eine starke Feuchtigkeit zu erwarten. Die Lichtverhältnisse können beispielsweise über geeignete Sensoren aber auch über den momentanen Schaltzustand der Beleuchtungsanlage des Landfahrzeugs abgefragt werden. Schließlich kann unter den Sensoren auch noch ein Kompass vorgesehen sein. Aufgrund der von den Sensoren ermittelten Daten kann die Rechnereinheit 7 den von dem Landfahrzeug zurückgelegten Weg und dessen Richtung berechnen.

Aufgrund der Ausgangssignale der Sensoren 5 kann die Berechnungseinheit 9 die momentane Geschwindigkeit des Fahrzeugs berechnen. Entsprechende Ausgangssignale der Sensoren 5 werden der Berechnungseinheit 9 eingegeben, was in Figur 1 durch einen Pfeil angedeutet ist.

Die Rechnereinheit 7 berechnet aus den hier vorliegenden Daten die künftige Fahrtstrecke des Fahrzeugs und gibt ein entsprechendes Ausgangssignal, angedeutet durch einen Pfeil in Figur 1, an die Berechnungseinheit 9 ab. Für die Berechnung der Künftigen Fahrtstrecke kann eine Routensuche hilfreich sein, die ausgehend von der aktuellen Position eine oder mehrere Fahrtrouten zu einem vom Fahrer eingegebenen Ziel berechnet.

Die Berechnungseinheit 9 dient der Berechnung einer für die künftige Strecke relevante Grenzgeschwindigkeit. Auf die Berechnungsarten wird unten genauer eingegangen. In der Vergleichseinrichtung 10 erfolgt eine sogenannte Gefährdungsberechnung, die insbesondere auf einem Vergleich der aktuellen Geschwindigkeit des Fahrzeugs mit einer Grenzgeschwindigkeit beruht, die von der Berechnungseinheit 9 bestimmt wurde. Sollte die momentane Fahrzeuggeschwindigkeit von der Grenzgeschwindigkeit abweichen, kann einerseits ein Ausgangssignal an die Informationseinrichtung 11 und anderseits ein entsprechendes Signal an die Umsetzungseinrichtung 13 abgegeben werden. Die Informationsausgabeeinrichtung 11 kann den Fahrer optisch und/oder akustisch auf eine drohende Gefahr hinweisen, die überdies auch darauf beruhen kann, daß die momentane Geschwindigkeit unterhalb einer gewünschten Grenzgeschwindigkeit liegt.

Bei Abweichungen der momentanen Geschwindigkeit von der Grenzgeschwindigkeit kann über die Umsetzungseinrichtung 13 auch unmittelbar auf Stellglieder des Fahrzeugs Eingriff genommen werden. Beispielsweise ist bei Überschreitung der Grenzgeschwindigkeit eine Reduktion der aktuellen Geschwindigkeit des Fahrzeugs durch Eingriff in die Motorsteuerung oder in das Bremssystem des Kraftfahrzeugs möglich. Anderseits kann gegebenenfalls auch eine Beschleunigung des Fahrzeugs durch Eingriff in die Motorsteuerung bewirkt werden, falls die Situation dies erfordert.

Auf die einzelnen Eingriffsmöglichkeiten wird unten noch genauer eingegangen.

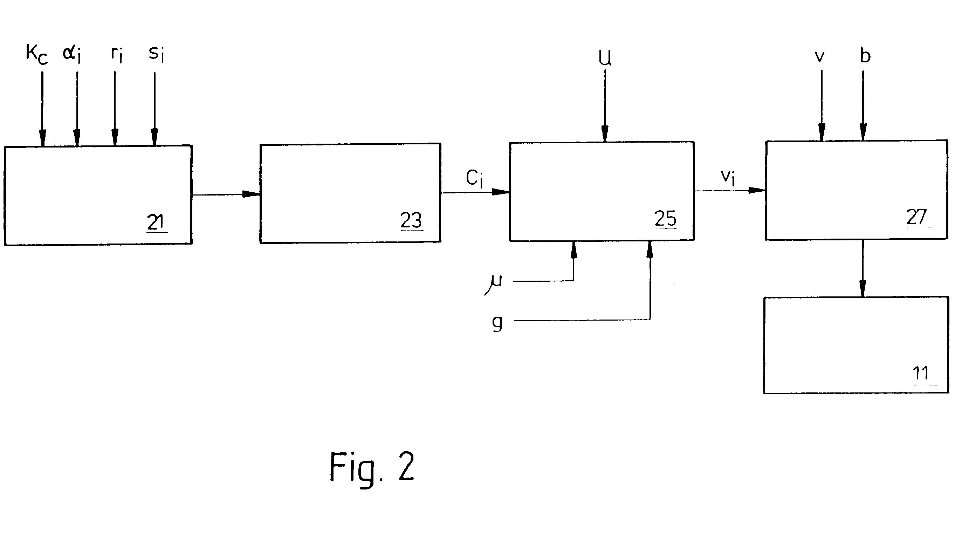

Anhand von Figur 2 wird eine erste Ausführungsform eines Verfahrens zur Berechnung der Grenzgeschwin-digkeit erläutert:

Die geographischen Daten bezüglich der Fahrtstrecke werden durch eine Verkettung von Kanten $K_i$ mit dem zugehörigen Winkel $\alpha_i$ (in Bogenmaß) eines festen Bezugsystems wiedergegeben, die ein Streckenstück zwischen zwei Stützpunkten $r_i$ $(x_i, y_i)$ und $r_{i+1}$ $(x_{i+1}, y_{i+1})$ beschreiben. Bei dem Aufbau einer elektronischen Karte werden Stützpunkte im allgemeinen dann gesetzt, wenn sich der Winkel $\alpha_i$ eines zugehörigen Kantenbereichs sich um $\pm\,\beta$ gegenüber dem Winkel $\alpha_{i-1}$ der vorangegangenen Kante geändert hat oder wenn die Kantenlänge s einen Maximalwert $s_{max}$ erreicht hat. Das heißt also, die in den Speicher abgelegte elektronische Karte beschreibt eine Fahrtstrecke durch einzelne Kantenbereiche.

Die Länge einer Kante zwischen den Stützpunkten $r_i$ und $r_{i+1}$ wird mit $s_i$ bezeichnet. Aus den Angaben zu dem Stützpunkt $r_i$ dieser Kante kann nach folgender Gleichung der zugehörige Krümmungswert $C_i$ im Stützpunkt $r_i$ berechnet werden:

$$C_i = 2(\alpha_i - \alpha_{i-1})/(s_i + s_{i-1})$$

Aus dem Krümmungswert des Streckenstücks im Bereich des Stützpunkts $r_i$ kann die Grenzgeschwindigkeit $v_i$ angegeben werden, mit der dieser Streckenabschnitt noch gefahrlos durchfahren werden kann. Die Berechnung der Grenzgeschwindigkeit folgt der Gleichung

$$v_i = \sqrt{(\mu\,g/C_i)}$$

In dieser Gleichung wird mit g die Erdbeschleunigung und mit $\mu$ der maximale Kraftschlußbeiwert bezeichnet, der im allgemeinen nicht bekannt ist. Er kann aber durch eine oder mehrere Konstantwerte abgeschätzt werden, die in einem geeigneten Speicherbereich abgelegt sind. Als Berechnungswert kann beispielsweise $\mu = 0,5$ angesetzt werden, falls die Straße trocken ist. Die Auswahl der Kraftschlußbeiwerte kann in Abhängigkeit von Umweltdaten U ausgewählt werden. Beispielsweise kann bei Glatteisgefahr oder bei Nässe, die durch ein eingeschalteten Scheibenwischer erkennbar ist, ein Kraftschlußbeiwert von $\mu = 0,3$ gewählt werden. Die genannten Werte stellen eine untere Abschätzung des Kraftschlußbeiwerts dar, so daß Sicherheitsreserven gegeben sind.

Durch die Festlegung einer Grenzgeschwindigkeit $V_i$ in einem durch eine Kante $K_i$ definierten Streckenbereich wird auch die maximale Querbeschleunigung des Fahrzeugs auf einen unkritischen Wert begrenzt.

Aus den einzelnen Angaben zu den Kanten $K_i$ dem zugehörigen Winkel $\alpha_i$, den jeweiligen Stützpunkten $r_i$ und den Kantenlängen $s_i$ wird also insgesamt die Fahrtstrecke definiert, die im Speicher 3 (siehe Figur 1) abgelegt und im ersten Block 21 gemäß Figur 2 definiert wird. Im Zweiten Block 23 in Figur 2 erfolgt die Berechnung des Krümmungswertes $C_i$ gemäß der oben wiedergegebenen Gleichung. Aus den jeweiligen Krümmungswerten $C_i$ wird im nächsten Block 25 unter Heranziehung des Kraftschlußbeiwerts $\mu$ und der Erdbeschleunigung g sowie der Umweltdaten U die Grenzgeschwindigkeit $v_i$ entsprechend der oben wiedergegebenen Gleichung berechnet. In einem vierten Block 27 wird die aktuelle Geschwindigkeit v mit der berechneten Grenzgeschwindigkeit $v_i$ verglichen. Bei Über- oder Unterschreitung der Grenzgeschwindigkeit $v_i$ kann auf geeignete Weise eine Fahrerwarnung erfolgen, beispielsweise durch Abgabe eines entsprechenden Signals an die Informationsausgabeeinrichtung 11, die hier oben in Figur 1 erläutert wurde.

Eine sinnvolle Warnung des Fahrers ist insbesondere dann möglich, wenn rechtzeitig vor Erreichen des Streckenabschnitts mit einer berechneten Grenzgeschwindigkeit die aktuelle Geschwindigkeit des Fahrzeugs angepaßt wurde, also rechtzeitig vor dem Befahren des entsprechenden Abschnitts die Geschwindigkeit reduziert wurde. An einem Zielpunkt soll also eine bestimmte Zielgeschwindigkeit $v_2$ erreicht sein, die der Grenzgeschwindigkeit $v_i$ entspricht. Das Fahrzeug soll von einer Ausgangsgeschwindigkeit $v_1$ in Abhängigkeit von der Entfernung s zu dem Zielpunkt gleichmäßig verzögert werden, wobei eine Verzögerung b gewählt wird. Diese Verzögerung wird auch im vierten Block 27 berücksichtigt. Die Ausgangsgeschwindigkeit des Fahrzeugs soll beim Erreichen des Zielpunkts der Grenzgeschwindigkeit entsprechen. Der Geschwindigkeitver-

lauf folgt der nachstehenden Gleichung:

$$v_1^2 = v_2^2 + 2bs$$

Für ein mäßiges Abbremsen wird eine Verzögerung von $b = 3\ m/s^2$ angenommen. Es können hier verschiedene Verzögerungswerte eingesetzt werden, auch beispielsweise eine, die durch Betätigung der Bremse des Fahrzeugs über die Umsetzungseinrichtung 13 in Figur 1 erreicht wird.

Für alle Stützpunkte vor dem Stützpunkt, in dem die Grenzgeschwindigkeit angenommen sein soll, läßt sich die zulässige Geschwindigkeit $v_i$ berechnen. Der kleinste Wert $v_{1min}$ aller Werte für $v_{1i}$ kann mit der aktuellen Geschwindigkeit $v$ des Fahrzeugs verglichen werden. Sollte diese größer sein als der Minimalwert $v_{1min}$, soll der Fahrer durch die Informationsausgabeeinrichtung 11 gewarnt werden. Zeitlich verzögert oder rechtzeitig kann über die Umsetzungseinrichtung 13 ein Eingriff in Stellglieder des Fahrzeugs, insbesondere in die Bremseinrichtung erfolgen.

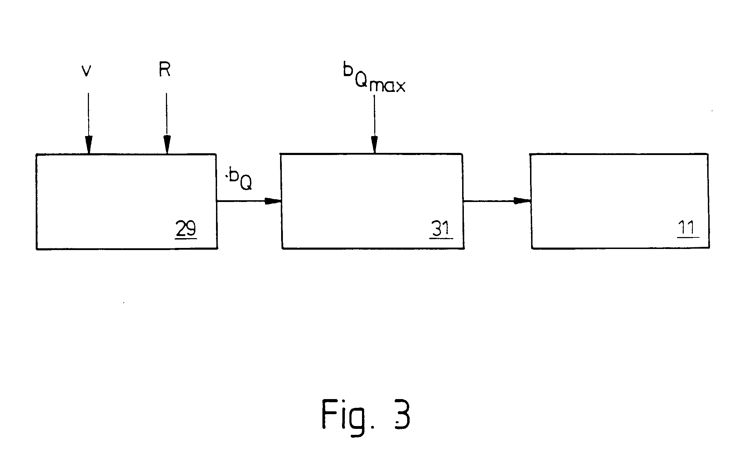

Anhand von Figur 3 wird erläutert, daß unmittelbar aus der momentanen Geschwindigkeit und aus dem rekonstruierbaren Radius R einer vorausliegenden Kurve in einem ersten Block 29 die Querbeschleunigung $b_Q$ des Fahrzeugs berechnet werden kann. Dieser Wert kann in einem zweiten Block 31 mit einem vorgebbaren maximalen Wert $b_{Qmax}$ der Querbeschlaunigung verglichen werden und bei einem erwarteten Überschreiten der maximalen Querbeschleunigung ein Warnsignal an den Fahrer abgegeben werden. Dazu wird von dem als Vergleicher ausgebildeten zweiten Block 31 ein entsprechendes Warnsignal an die Informationsausgabeeinrichtung 11 abgegeben.

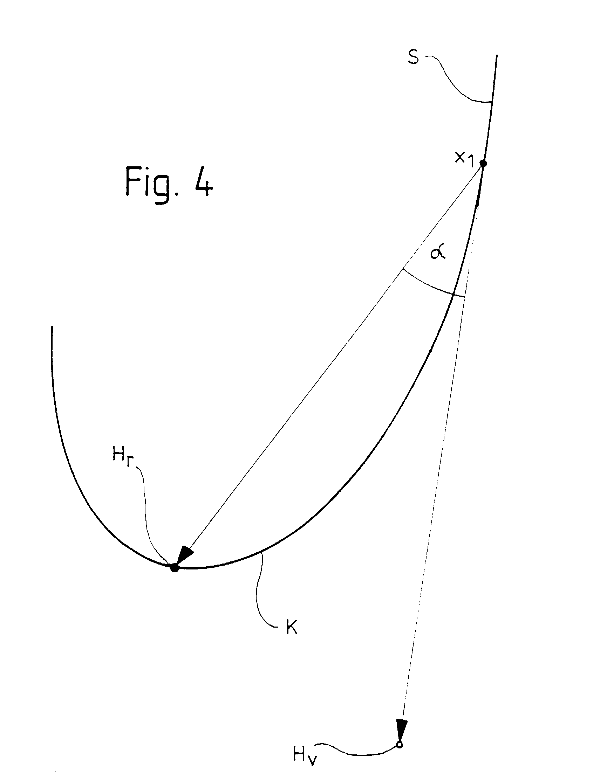

Anhand von Figur 4 soll eine weitere Ausführungsform der Berechnung der Grenzgeschwindigkeit erläutert werden. Die Darstellung zeigt dazu schematisch den Verlauf einer Straße S mit einer Kurve K. Das Fahrzeug befindet sich an der Stelle $x_1$ und bewegt sich mit einer momentanen Geschwindigkeit $v_{10}$ fort. Würde das Fahrzeug mit einer Verzögerung b abgebremst, ergäbe sich der folgende Bremsweg $s_b$:

$$s_b = v_{10}^2/2b$$

Unter diesen gegebenen Umständen erreichte das Fahrzeug den virtuellen Haltepunkt $H_v$.

Wenn das Fahrzeug bei derselben Verzögerung dem Verlauf der Straße folgt, kommt es an dem realen Haltepunkt $H_r$ zum Stand. Zwischen der theoretischen geradlinigen Fortsetzung der momentanen Fahrtrichtung und der Verbindungslinie zwischen dem momentanen Standort x1 und dem realen Haltepunkt $H_r$ im Bereich der Kurve K ist der Winkel $\alpha$ eingeschlossen.

Es ist ohne weiteres ersichtlich, daß bei Überschreiten eines Grenzwertes $\alpha_o$ der Verlauf der Kurve K von

dem momentanen Standort $x_1$ nicht mehr einsehbar ist. Das heißt, der reale Haltepunkt $H_r$ des Fahrzeugs liegt außerhalb der Sichtweite für den Fahrer.

Die Grenzgeschwindigkeit muß in diesem Fall so eingestellt werden, daß für alle Fahrsituationen die Geschwindigkeit des Fahrzeug so eingestellt wird, daß der reale Haltepunkt $H_r$ immer im Sichtbereich des Fahrers liegt. Wenn sich also herausstellt, daß die Verbindungslinie zwischen einem realen Haltepunkt $H_r$ und der momentanen Position $x_1$ des Fahrzeugs einen größeren Winkel $\alpha$ mit der theoretischen gradlinigen Fortsetzung der Fahrtrichtung einschließt als $\alpha_o$, muß die Geschwindigkeit des Fahrzeugs reduziert werden und ein entsprechendes Warnsignal an den Fahrer gegeben werden.

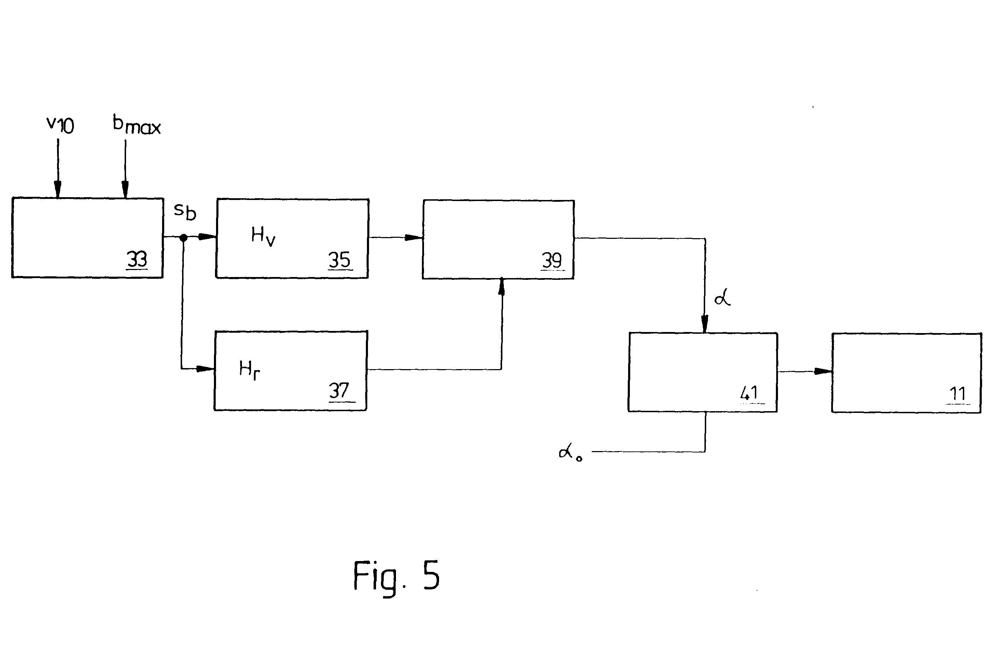

Eine derartige Funktion der Navigationseinrichtung ergibt sich aus dem Diagramm gemäß Figur 5.

Dort werden einem ersten Block 33 die Verzögerung, hier beispielsweise die maximale Verzögerung $b_{max}$ des Fahrzeugs und dessen aktuelle Geschwindigkeit $v_{10}$ eingegeben. Aus diesen Werten kann der Bremsweg $s_b$ des Fahrzeugs berechnet und der virtuelle Haltepunkt $H_v$ des Fahrzeugs in einem zweiten Block 35 berechnet werden. Aus dem in Speicher 3 abgelegten Werten zu der Fahrtstrecke (siehe Figur 1) kann in einem dritten Block 37 aufgrund des Bremswegs $s_b$ der reale Haltepunkt $H_r$ bestimmt werden.

In einem weiteren Block 39 kann aus dem virtuellen und realen Haltepunkt der Winkel $\alpha$ berechnet werden.

Durch einen im fünften Block 41 durchgeführten Vergleich des aktuellen Winkels $\alpha$ mit einem Grenzwert $\alpha_o$ kann ermittelt werden, ob der reale Haltepunkt $H_r$ noch im Sichtbereich des Fahrers liegt oder ob dieser außerhalb der Einsehbarkeit eines vorausliegenden gekrümmten Streckenabschnittes K (siehe Figur 4) angeordnet ist. In diesem Fall wird durch Abgabe eines entsprechenden Warnsignals die Informationsausgabeeinrichtung 11 bewirkt und der Fahrer optisch und/oder akustisch gewarnt. Gegebenenfalls kann -wie in allen vorangegangenen Fällen auch- gleichzeitig oder zeitlich verzögert die Umsetzungseinrichtung 13 aktiviert und bespielsweise die Bremsvorrichtung des Fahrzeugs betätigt werden. Gegebenenfalls reicht auch die Beeinflussung der Motorelektronik, um eine Verzögerung des Fahrzeugs zu gewährleisten, aufgrund derer der reale Haltepunkt wieder im Sichtbereich des Fahrers liegt.

Aus dem oben Gesagten wird ohne weiteres deutlich, daß mit Hilfe der Navigationseinrichtung beziehungsweise des Weginformations-Ausgabeverfahrens sichergestellt ist, daß der Fahrer bei Erreichen eines gekrümmten Streckenabschnitts die vorgegebene Grenzgeschwindigkeit nicht überschreitet. Dabei ist es keinesfalls erforderlich, daß die für einen Streckenabschnitt gegebenen Geschwindigkeitswerte in dem Speicher 3 oder in einem anderen zugehörigen Speicher der Navigationseinrichtung 1 abgelegt sind. Es ist vielmehr möglich, mit Hilfe einer Berechnungeinheit 9 in jedem Fall die aktuelle Grenzgeschwindigkeit zu berechnen und dabei auch noch Umwelteinflüsse, Glatteis oder Fahrbahnnässe, zu berücksichtigen. Dabei ist nicht nur sichergestellt, daß eine Höchstgeschwindigkeit eingehalten wird, es vielmehr auch möglich, eine bestimmte Mindestgeschwindigkeit vorzugeben, die beispielsweise am Ende eines Kurvenbereichs eingehalten werden sollte. Dies ist beispielsweise bei Beschleunigungsspuren einer Einmündung häufig der Fall. Nahert sich also ein Fahrer einer Einmündung mit einer Beschleunigungsspur, wird er dazu angeregt, eine bestimmte Mindestgeschwindigkeit einzuhalten, damit ein sicheres Einfädeln in die neue Fahrspur möglich ist. Selbstverständlich wird er nach dem beschriebenen Verfahren und mit Hilfe der Navigationseinrichtung davor gewarnt, wenn er sich einer Einmündung mit oder ohne Beschleunigungsspur mit zu hoher Geschwindigkeit nähert. Abweichungen der momentanen Geschwindigkeit von einer Grenzgeschwindigkeit werden also von dem Navigationssystem erfaßt und dem Fahrer angezeigt. In allen Fällen erfolgt über die Informationsausgabeeinrichtung eine Warnung des Fahrers. Es ist zusätzlich auch möglich, über die Umsetzungseinrichtung einen Eingriff in das Fahrgeschehen durch Beeinflussung der Stellglieder des Fahrzeugs durchzuführen. Dabei kann einerseits das Fahrzeug bei Überschreiten einer bestimmten Höchstgeschwindigkeit abgebremst und andererseits eine Beschleunigung des Fahrzeugs bewirkt werden, wenn dieses beispielsweise im Bereich einer Einmündung mit Beschleunigungsspur mit einer zu geringen Geschwindigkeit fährt.

In allen Fällen kann die Aktivierung der Informationsausgabeeinrichtung in Abhängigkeit von der momentanen Geschwindigkeit erfolgen. Sollte sich das Fahrzeug einer Gefahrenstelle mit hoher Geschwindigkeit nähern, würde damit die Warnung des Fahrers früher erfolgen, als wenn das Fahrzeug mit geringer Geschwindigkeit auf die Gefahrenstelle zufährt. Zusätzlich können bei der Warnung des Fahrers Umwelteinflüsse berücksichtigt werden. Das heißt also, bei Glatteis würde beispielsweise eine frühere Warnung des Fahrers erfolgen, damit rechtzeitig die Geschwindigkeit auf eine Gefahrensituation eingestellt wird.

Bei der Aktivierung der Informationsausgabeeinrichtung 11 kann in allen hier beschriebenen Fällen einerseits allgemein vor der nahenden Gefahr gewarnt werden, es ist jedoch auch möglich, daß dem Fahrer konkret die anzustrebende Geschwindigkeit mitgeteilt wird, also beispielsweise die Grenzgeschwindigkeit für die vorausliegenden Streckenabschnitte.

Nach allem zeigt sich, daß die Navigationseinrichtung durch einen programmgesteuerten Rechner realisiert werden kann. Auf diese Weise ist eine sehr kompakte Realisierung der Navigationseinrichtung möglich, so daß eine Integration außer in Lastkraftwagen auch in Personenkraftwagen aber auch in Motorrädern möglich ist. Zusätzlich ist es möglich, die Navigationseinrichtung als Teil einer Steuerungseinrichtung eines Landfahrzeugs auszubilden und beispielsweise mit der Motorsteuerung zu kombinieren.

**Patentansprüche**

1. Navigationseinrichtung für Landfahrzeuge, insbesondere für Personenkraftiwagen und Lastkraftwagen, mit einem Speicher für geographische Daten, Sensoren zum Erfassen aktueller Fahrdaten, einer Vergleichseinrichtung und mit einer Informationsausgabeeinrichtung für den Fahrer, **gekennzeichnet durch** eine Berechnungseinheit (9), die aus den gespeicherten geographischen Daten zum Verlauf der Fahrtstrecke die für das Durchfahren der Strecke sichere Grenzgeschwindigkeit ($v_i$) bestimmt, und deren Ausgangssignal gemeinsam mit anderen Daten der Vergleichseinrichtung (10) eingebbar ist, die bei Unter- oder Überschreiten der Grenzgeschwindigkeit die Informationsausgabeeinrichtung (11) aktiviert.

2. Navigationseinrichtung nach Anspruch 1, **gekennzeichnet durch** eine Stellglieder des Fahrzeugs beeinflussende Umsetzungseinrichtung (13).

3. Navigationseinrichtung nach Anspruch 1 oder 2, **dadurch gekennzeichnet,** daß die geographischen Daten zur Fahrtstrecke als Kanten ($K_i$) mit dem Winkel ($\alpha_i$) eines festen Bezugssystems abgespeichert sind, die das Streckenstück zwischen zwei Stützpunkten ($r_i$, $r_{i+1}$) beschreiben und daß die Länge ($s_i$) eines Kantenstücks zur Berechnung eines Krümmungswerts ($C_i$) heranziehbar ist, der der Berechnung der Grenzgeschwindigkeit ($v_i$) zugrundelegbar ist.

4. Navigationseinrichtung nach einem der vorhergehenden Ansprüche, **dadurch gekennzeichnet**, daß die Informationsausgabeeinrichtung (11) und/oder die Umsetzungseinrichtung (13) in Abhängigkeit von der momentanen und von der Grenzgeschwindigkeit aktivierbar ist.

5. Navigationseinrichtung nach Anspruch 4, **dadurch gekennzeichnet**, daß die Informationsausgabeeinrichtung (11) in Abhängigkeit von dem jeweils kleinsten Wert der Grenzgeschwindigkeit der vorausliegenden Streckenabschnitte aktivierbar ist.

6. Navigationseinrichtung nach einem der vorhergehenden Ansprüche, **dadurch gekennzeichnet**, daß in der Berechnungseinheit (9) die Abweichung zwischen der theoretischen geradlinigen Fortsetzung der momentanen Fahrtrichtung und der Verbindungslinie zwischen der momentanen Position ($x_i$) des Fahrzeugs und einem auf der tatsächlichen künftigen Fahrtstrecke (K) liegenden bei einer Bremsung des Kraftfahrzeugs erreichten Halte-

punkt ($H_r$) berechenbar ist.

7. Navigationseinrichtung nach Anspruch 6, **dadurch gekennzeichnet**, daß der zwischen der geradlinigen Fortsetzung und der Verbindunglinie eingeschlossene Winkel ($\alpha$) mit einem Grenzwert ($\alpha_o$) verglichen wird, bei dessen Überschreiten der aus der momentanen Geschwindigkeit berechnete Haltepunkt ($H_r$) des Fahrzeugs außerhalb der Einsehbarkeit eines vorausliegenden gekraümmten Streckenabschnitts (K) liegt.

8. Navigationseinrichtung nach Anspruch 6 oder 7, **dadurch gekennzeichnet**, daß die Informationsanzeigeeinrichtung (11) und/oder die Umsetzungseinrichtung (13) von der Vergleichseinrichtung (10) aktivierbar ist, wenn die momentane Geschwindigkeit größer als die Grenzgeschwindigkeit ist, bei der das Fahrzeug innerhalb der Einsehbarkeit eines gekrümmten Streckenabschnitts (K) zur Stillstand bringbar ist.

9. Navigationseinrichtung nach einem der Ansprüche 6 bis 8, **dadurch gekennzeichnet**, daß der bis zum Haltepunkt ($H_r$) zurückgelegte Bremsweg in Abhängigkeit von verschiedenen, vorgebbaren Bremsverzögerungswerten und vorzugsweise unter Berücksichtigung von Umweltdaten bestimmbar ist.

10. Navigationseinrichtung nach einem der vorhergehenden Ansprüche, **dadurch gekennzeichnet**, daß die Informationsausgabeeinrichtung (11) und/oder die Umsetzungseinrichtung (13) aktivierbar ist, wenn die Grenzgeschwindigkeit im Bereich einer Beschleunigungsspur einer Einmündung unterschritten wird.

11. Vorrichtung nach einem der vorhergehenden Ansprüche, **dadurch gekennzeichnet**, daß die Berechnungseinheit (9), die Vergleichseinrichtung (10) und die Umsetzungseinrichtung (13) als programmgesteuerter Rechner ausgebildet sind.

12. Verfahren zur Ausgabe von Weginformationen für Fahrer von Landfahrzeugen, insbesondere von Personenkraftwagen und Lastkraftwagen, bei welchem geographische Daten mit aktuellen Fahrdaten verglichen werden und bei gefährlichen Situationen der Fahrer gewarnt wird, **dadurch gekennzeichnet**, daß die für das sichere Durchfahren einer Strecke einzuhaltende Grenzgeschwindigkeit aus den gespeicherten geographischen Daten bezüglich der Fahrtstecke berechnet wird und daß bei Unter-oder Überschreiten der Grenzgeschwindigkeit der Fahrer informiert wird.

13. Verfahren nach Anspruch 12, **dadurch gekennzeichnet**, daß für die Berechnung der Grenzgeschwindigkeit die der Fahrtstrecke zugeordneten Kanten und zugehörigen Winkel sowie wie die Kantenlange zur Berechnung eines Krummungswerte herangezogen werden.

14. Verfahren nach Anspruch 12, **dadurch gekennzeichnet**, daß zur Berechnung der Grenzgeschwindigkeit die Abweichung zwischen der theoretischer geradlinigen Fortsetzung der momentanen Fahrtrichtung und der Verbindungslinie zwischen der momentanen Position des Fahrzeugs und einen auf der tatsächlichen künftigen Fahrtstrecke liegenden bei einer Bremsung des Fahrzeugs erreichten Haltepunkt berechnet wird.

15. Verfahren nach Anspruch 14, **dadurch gekennzeichnet,** daß der zwischen der geradlinigen Fortsetzung und der Verbindungslinie eingeschlossene Winkel mit einen Grenzwert verglichen wird, bei dessen Überschreitung der aufgrund der momentanen Geschwindigkeit berechnete Haltepunkt des Fahrzeugs außerhalb der Einsehbarkeit eines vorausliegenden gekrümmten Streckenabschnitt liegt.

16. Verfahren nach einem der Ansprüche 12 bis 15, **dadurch gekennzeichnet,** daß eine Warnsignal an den Fahrer abgegeben wird, falls im Bereich einer Beschleunigungsspur einer Einmündung die Grenzgeschwindigkeit unterschritten wird.

17. Verfahren nach einem der Ansprüche 12 bis 16, **dadurch gekennzeichnet**, daß die Informationsausgabe und/oder die Beeinflussung von Stellgliedern des Fahrzeugs in Abhängigkeit von der momentanen Geschwindigkeit und/oder von Umweltdaten erfolgt.

18. Verfahren nach einem der Ansprüche 12 bis 17, **dadurch gekennzeichnet**, daß ausgehend von einer aktuellen Position des Fahrzeugs eine oder mehrere Fahrtstrecken zu einem vom Fahrer vorgegebenen Ziel berechnet werden.

**Claims**

1. Navigation device for land vehicles, in particular for passenger vehicles and goods vehicles, having a memory for geographic data, sensors for detecting current motion data, a comparison device and an information output device for the driver, characterized by a calculation unit (9) which uses the stored geographic data relating to the course of the path to determine the safe speed limit ($v_i$) for driving over that path, and whose output signal can be entered together with other data in the comparison device (10), which activates the information output device (11) if the speed limit is undershot or exceeded.

2. Navigation device according to Claim 1, characterized by a conversion device (13) which influences vehicle control elements.

3. Navigation device according to Claim 1 or 2, characterized in that the geographic data relating to the path are stored as edges ($K_i$) using the angle ($\alpha_i$) of a fixed reference system, these data describing the part of the path between two waypoints ($r_i$, $r_{i+1}$), and in that the length ($s_i$) of an edge element can be used to calculate a curvature value ($C_i$) on which the calculation of the speed limit ($v_i$) can be based.

4. Navigation device according to one of the preceding claims, characterized in that the information output device (11) and/or the conversion device (13) can be activated as a function of the instantaneous speed and as a function of the speed limit.

5. Navigation device according to Claim 4, characterized in that the information output device (11) can be activated as a function of the respective minimum value of the speed limit for the preceding path sections.

6. Navigation device according to one of the preceding claims, characterized in that the calculation unit (9) can calculate the error between the theoretical straight-line continuation of the instantaneous direction of motion and the connecting line between the instantaneous position ($x_i$) of the vehicle and a stopping point ($H_r$) which is located on the actual future path (K) and is reached by braking the motor vehicle.

7. Navigation device according to Claim 6, characterized in that the angle ($\alpha$) included between the straight-line continuation and the connecting line is compared with a limit value ($\alpha_0$) which, if exceeded, means that the stopping point ($H_r$) of the vehicle calculated from the instantaneous speed is beyond the visibility range of a curved path section (K) which has not yet been reached.

8. Navigation device according to Claim 6 or 7, characterized in that the information display device (11) and/or the conversion device (13) can be activated by the comparison device (10) if the instantaneous speed is greater than the speed limit at which the vehicle can be brought to rest within the visibility range of a curved path section (K).

9. Navigation device according to one of Claims 6 to 8, characterized in that the braking distance travelled to the stopping point ($H_r$) can be determined as a function of various, predetermined braking deceleration values, and preferably taking account of environmental data.

10. Navigation device according to one of the preceding claims, characterized in that the information output device (11) and/or the conversion device (13) can be activated if the speed limit is undershot in the region of an acceleration lane of a sliproad.

11. Apparatus according to one of the preceding claims, characterized in that the calculation unit (9), the comparison device (10) and the conversion device (13) are designed as program-controlled computers.

12. Method for outputting position information for drivers of land vehicles, in particular of passenger vehicles and goods vehicles, in which geographic data are compared with current motion data and the driver is warned in the event of hazardous situations, characterized in that the speed limit to be complied with for driving safely over a path is calculated from the stored geographic data with respect to that path, and in that the driver is informed if the speed limit is undershot or exceeded.

13. Method according to Claim 12, characterized in that the speed limit is calculated using the edges associated with the path and the associated angles, in the same way as the edge length for calculating a curvature value.

14. Method according to Claim 12, characterized in that the speed limit is calculated by calculating the error between the theoretical straight-line continuation of the instantaneous direction of motion and the connecting line between the instantaneous position of the vehicle and a stopping point which is located on the actual future path and is reached by braking the vehicle.

15. Method according to Claim 14, characterized in that the angle included between the straight-line continuation and the connecting line is compared with a limit value which, if exceeded, means that the stopping point of the vehicle calculated on the basis of the instantaneous speed is beyond the visibility range of a curved path section which has not yet been reached.

16. Method according to one of Claims 12 to 15, characterized in that a warning signal is emitted to the driver if the speed limit is undershot in the region of an acceleration lane of a sliproad.

17. Method according to one of Claims 12 to 16, characterized in that the information output and/or the influencing of control elements in the vehicle are/is carried out as a function of the instantaneous speed and/or of environmental data.

18. Method according to one of Claims 12 to 17, characterized in that one or more paths to a destination preset by the driver is or are calculated on the basis of a current vehicle position.

## Revendications

1. Système de navigation pour véhicules routiers, en particulier pour les voitures automobiles particulières, et pour les camions automobiles, avec une mémoire pour des données géographiques, des détecteurs servant à détecter des données actuelles de marche du véhicule, un système de comparaison et un système de délivrance d'informations pour le conducteur,
caractérisé par
une unité de calcul (9) qui détermine à partir des données géographiques mises en mémoire la vitesse limite $(v_i)$ de sécurité pour le parcours du trajet suivi par le véhicule et dont le signal de sortie peut être délivré en même temps que d'autres données au système de comparaison (10) qui en cas de sous-dépassement ou de dépassement de la vitesse limite active le système de délivrance d'informations (11).

2. Système de navigation, selon la revendication 1,
caractérisé par
un système de conversion (11) qui active des organes de réglage du véhicule.

3. Système de navigation selon la revendication 1 ou 2,
caractérisé en ce que

   • les données géographiques relatives au trajet suivi par le véhicule sont mises en mémoire sous forme de segments $(K_i)$ avec l'angle $(\alpha_i)$ d'un système fixe de référence, segments qui décrivent le morceau de trajet compris entre deux points d'appui$(r_i;\ r_{i+1})$ et
   • la longueur (si) d'un morceau de segment peut être utilisée pour calculer une valeur de courbure $(C_i)$ qui peut être mise à la base du calcul de la vitesse limite $(v_i)$.

4. Système de navigation selon l'une des revendications précédentes,
caractérisé en ce que
le système de délivrance d'informations (11) et/ou le système de conversion (13) peut être activé en fonction de la vitesse momentanée et de la vitesse limite.

5. Système de navigation, selon la revendication 4,
caractérisé en ce que
le système de délivrance d'informations (11) peut être activé en fonction de la plus petite valeur de la vitesse limite pour les sections de trajet se trouvant en avant du véhicule.

6. Système de navigation selon l'une des revendications précédentes,
caractérisé en ce que
dans l'unité de calcul (9) on peut calculer l'écart entre le prolongement théorique en ligne droite de la direction momentanée suivie par le véhicule et la ligne de liaison entre la position momentanée $(x_i)$ du véhicule et un point d'arrêt $(H_r)$ se trouvant sur le trajet futur effectif de passage du véhicule (K), atteint lors d'un freinage du véhicule à moteur.

7. Système de navigation, selon la revendication 4,
caractérisé en ce que
l'angle $(\alpha)$ qui est compris entre le prolongement en ligne droite et la ligne de liaison est comparé à une valeur limite $(\alpha_o)$, lors du dépassement de laquelle le point d'arrêt du véhicule qui est calculé à partir de la vitesse momentanée, se trouve en dehors de la visibilité d'une section de trajet (K), formant une courbe se trouvant en avant du véhicule.

8. Système de navigation, selon la revendication 6 ou 7,
caractérisé en ce que
le système de délivrance d'informations (11) et/ou le système de conversion (13) peut être activé par le système de comparaison (10), quand la vitesse momentanée est plus grande que la vitesse limite, pour laquelle on peut arrêter le véhicule à l'intérieur de la zone visible d'une section du trajet (K) présentant une courbe.

9. Système de navigation, selon l'une des revendications 6 à 8,
caractérisé en ce que
le trajet de freinage parcouru jusqu'au point d'arrêt (Hr) peut être déterminé en fonction de différentes valeurs de ralentissement que l'on peut définir au préalable, et de préférence en prenant en considération des données de l'environnement.

10. Système de navigation selon l'une des revendications précédentes,
caractérisé en ce que
le système de délivrance d'informations (11) et/ou le système de conversion (13) peut être activé quand la vitesse limite est sous-dépassée dans la zone d'une voie d'insertion d'un raccordement.

11. Dispositif selon l'une des revendications précédentes,
caractérisé en ce que
l'unité de calcul (9), le système de comparaison (10) et le système de conversion (13) sont constitués sous la forme d'un ordinateur commandé par des programmes.

**12.** Procédé servant à délivrer au conducteur d'un véhicule routier, en particulier d'une voiture automobile particulière et d'un camion automobile, des informations relatives au trajet suivi par le véhicule, dans lequel on compare des données géographiques aux données actuelles de la marche du véhicule et en cas de situations dangereuses on avertit le conducteur, caractérisé en ce que

l'on calcule la vitesse limite à respecter pour parcourir de façon sûre un trajet, à partir des données géographiques mises en mémoire, se rapportant au trajet suivi par le véhicule, et en ce qu'en cas de sous-dépassement ou de dépassement de la vitesse limite on en informe le conducteur.

**13.** Procédé selon la revendication 12, caractérisé en ce que pour le calcul de la vitesse limite on utilise les segments associés au trajet suivi par le véhicule et les angles correspondants ainsi que la longueur des segments pour calculer une valeur de courbure.

**14.** Procédé selon la revendication 12, caractérisé en ce que pour le calcul de la vitesse limite on détermine l'écart entre le prolongement théorique en ligne droite de la direction momentanée de la marche du véhicule et la ligne de liaison entre la position momentanée du véhicule et un point d'arrêt, se trouvant sur le trajet futur effectif du véhicule, point atteint en cas de freinage du véhicule.

**15.** Procédé selon la revendication 12, caractérisé en ce que l'on compare l'angle compris entre le prolongement en ligne droite et la ligne de liaison à une valeur limite, lors du dépassement de laquelle le point d'arrêt du véhicule, calculé sur la base de la vitesse momentanée, se trouve en dehors de la visibilité d'une section du trajet, présentant une courbe en avant du véhicule.

**16.** Procédé selon l'une des revendications 12 à 15, caractérisé en ce que l'on délivre un signal d'avertissement au conducteur au cas où la vitesse limite est sous-dépassée dans la zone d'une voie d'insertion de raccordement.

**17.** Procédé selon l'une des revendications 12 à 16, caractérisé en ce que la délivrance d'informations et/ou l'influencement des organes de réglage du véhicule a lieu en fonction de la vitesse momentanée et/ou de données de l'environnement.

**18.** Procédé selon l'une des revendications 12 à 17, caractérisé en ce que l'on calcule un ou plusieurs trajets à suivre par le véhicule pour atteindre une destination fixée par le conducteur en partant d'une position actuelle du véhicule.

Fig. 1

EP 0 586 626 B1

Fig. 2

$V$     $R$           $^{b}Q_{max}$

$\cdot b_Q$

29         31         11

# Fig. 3

Fig. 4

EP 0 586 626 B1

$v_{10}$   $b_{max}$

$s_b$

$H_v$   33   35   39

$H_r$   37

$\alpha$

41   11

$\alpha_0$

Fig. 5